# DEMANDE DE BREVET EUROPEEN

(11) **EP 1 953 904 A1**
(43) Date de publication de la demande: **06.08.2008**
(21) Numéro de dépôt: 08101205.6
(22) Date de dépôt: 01.02.2008
(51) Int. Cl.: H02M 1/34, H02M 3/158

(54) **Circuit d'aide à la commutation pour un convertisseur à découpage**

(30) Priorité: 02.02.2007 FR 0753026
(71) Demandeur: ST MICROELECTRONICS S.A., 92120 Montrouge (FR)
(72) Inventeur: Cuellar, Francis, 37150, LA CROIX EN TOURAINE (FR); Rivet, Bertrand, 37210, VOUVRAY (FR)
(74) Mandataire: de Beaumont, Michel

(57) **Abrégé**

L'invention concerne un convertisseur de puissance à découpage, comportant, entre une première extrémité (4) d'un élément inductif principal (L0) et un interrupteur (K), un élément inductif (L') bi-valeur (LA, LB) à commutation automatique entre ses deux valeurs.

## Description

### Domaine de l'invention

La présente invention concerne le domaine des convertisseurs de puissance dits à découpage. De tels convertisseurs utilisent un élément inductif, associé à un interrupteur de puissance et à une diode de roue libre, pour effectuer une conversion d'énergie et une correction du facteur de puissance, généralement à partir d'une tension d'entrée continue. On connaît des convertisseurs abaisseurs de tension (BUCK), élévateurs de tension (BOOST) et mixtes (abaisseurs-élévateurs).

### Exposé de l'art antérieur

La demande de brevet US-A-2004/0113596 décrit un circuit d'aide à la commutation pour un convertisseur de puissance. Un circuit magnétique à plusieurs enroulements et à diodes de commutation sert à organiser la décharge d'une inductance de contrôle du di/dt à la fermeture de l'interrupteur de puissance du convertisseur et à stocker l'énergie lors de la commutation pour la transférer à la charge alimentée par le convertisseur.

### Résumé de l'invention

La présente invention vise à pallier tout ou partie des inconvénients des convertisseurs à découpage.

Un objet vise plus particulièrement une amélioration du principe utilisé par un circuit d'aide à la commutation à circuit magnétique organisant la décharge d'une inductance de contrôle du di/dt.

Un objet vise également une solution compatible avec une utilisation du convertisseur à des fréquences de plusieurs centaines de kHz et pour des puissances de l'ordre du kW.

Pour atteindre tout ou partie de ces objets ainsi que d'autres, il est prévu un convertisseur de puissance à découpage, comportant, entre une première extrémité d'un élément inductif principal et un interrupteur, un élément inductif bi-valeur à commutation automatique entre ses deux valeurs.

Selon un mode de réalisation, l'élément inductif bi-valeur comporte deux éléments en série dont le point milieu est relié, par une première diode, à une borne d'application d'une tension d'entrée.

Selon un mode de réalisation, l'élément inductif bi-valeur comporte deux éléments en série dont le point milieu est relié, par une première diode, à une borne de fourniture d'une tension de sortie.

Selon un mode de réalisation, l'élément inductif bi-valeur est une inductance à point milieu.

Selon un mode de réalisation, l'élément inductif principal forme un enroulement principal d'un circuit magnétique dont deux enroulements secondaires électriquement en série ont le point milieu de cette association en série relié à ladite première extrémité de l'enroulement inductif principal.

Selon un mode de réalisation, chaque enroulement secondaire est en série avec une diode autre que la première diode.

Selon un mode de réalisation, les enroulements secondaires participent à une décharge de l'élément inductif bi-valeur à l'ouverture et à la fermeture de l'interrupteur, l'un d'entres eux participant à un transfert de l'énergie correspondant à la fermeture audit enroulement principal.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente un exemple de convertisseur élévateur de tension à circuit d'aide à la commutation usuel ;
les figures 2A, 2B, 2C, 2D, 2E, 2F et 2G illustrent, sous forme de chronogrammes, le fonctionnement du convertisseur de la figure 1 ;
les figures 3A et 3B sont des agrandissements superposés des chronogrammes des figures 2C et 2D pour deux valeurs d'inductance de contrôle du di/dt ;
les figures 4A et 4B sont des extraits de la figure 2F pour deux valeurs de puissance de sortie appellées par la charge ;
la figure 5 représente un mode de réalisation d'un convertisseur de tension selon la présente invention ;
les figures 6A, 6B et 6C illustrent, sous forme de chronogrammes, le fonctionnement du circuit de la figure 5 ;
la figure 7 représente un mode de réalisation d'un convertisseur élévateur de tension selon la présente invention; et
la figure 8 représente un mode de réalisation d'un convertisseur abaisseur de tension selon la présente invention.

### Description détaillée

De mêmes éléments ont été désignés par de mêmes références aux différentes figures. Pour des raisons de clarté, seuls les éléments qui sont nécessaires à la compréhension de l'invention ont été représentés aux figures et seront décrits par la suite. En particulier, la constitution du circuit de commande de l'interrupteur de puissance n'a pas été détaillée, sa mise en oeuvre étant à la portée de l'homme du métier à partir des indications fonctionnelles données dans la présente description.

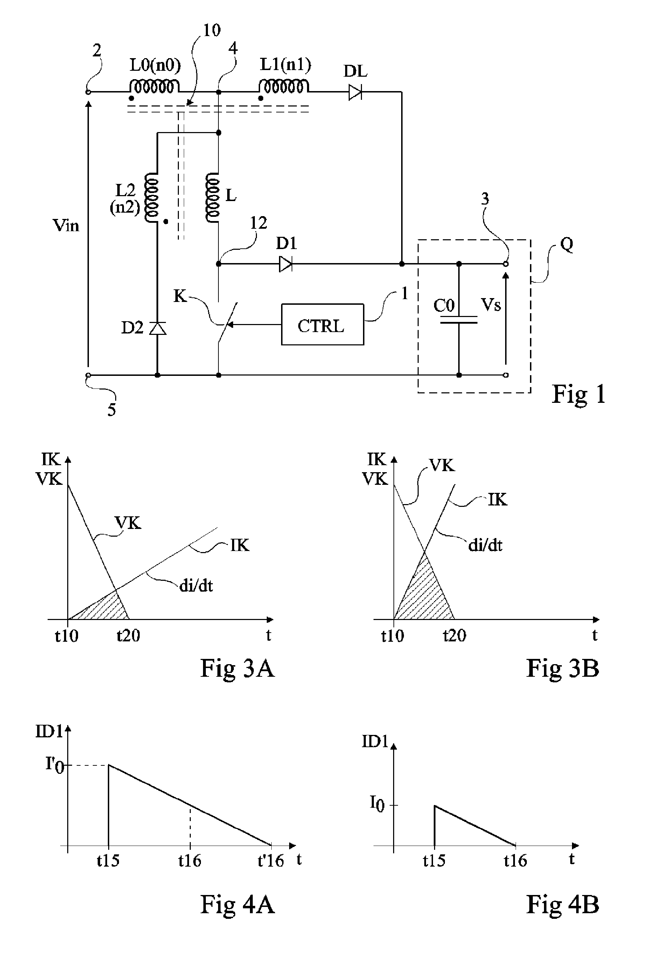

La figure 1 représente le schéma électrique d'un exemple de convertisseur à découpage élévateur de tension, équipé d'un circuit d'aide à la commutation usuel.

Le convertisseur de puissance comporte un interrupteur K commandé par un circuit 1 (CTRL), par exemple, un circuit de commande par modulation de largeur d'impulsions (PWM), par modulation de fréquence d'impulsions (FWM), etc. Une inductance d'accumulation d'énergie L0 est connectée, par une première borne, à une borne 2 d'application d'une tension d'entrée Vin (de son potentiel plus positif) fournie par une source non représentée (par exemple, continue ou alternative redressée). L'interrupteur K est en série avec une inductance L de contrôle du di/dt, reliée à la deuxième borne 4 de l'inductance L0. L'autre borne de l'interrupteur K est connectée à une deuxième borne 5 d'application de la tension d'entrée Vin (de son potentiel plus négatif, généralement un potentiel de référence, typiquement la masse). Une diode de roue libre DL est placée entre le point 4 et une borne positive 3 de sortie du convertisseur. Cette borne positive est connectée à une première électrode d'un condensateur de stockage C0 (le cas échéant faisant partie de la charge Q à alimenter) aux bornes duquel est présente la tension de sortie Vs. L'autre borne du condensateur C0 est reliée à la masse 5 et la cathode de la diode DL est côté borne 3.

L'inductance L0 fait partie d'un circuit magnétique 10 dont elle constitue l'enroulement principal. Ce circuit magnétique 10 comprend deux enroulements secondaires L1 et L2 ayant des nombres de spires respectivement n1 et n2 inférieurs au nombre n0 de spires de l'inductance L0. Un premier enroulement L1 du circuit magnétique 10 est connecté en série avec la diode DL entre les bornes 3 et 4. Un deuxième enroulement L2 relie le point 4 à la borne 5 en étant associé en série à une diode D2, l'anode de la diode D2 étant dirigée vers la masse 5. Enfin, une diode D1 relie, à la borne 3, le point 12 entre l'inductance L et l'interrupteur K, l'anode de la diode D1 étant reliée au point 12.

Le rôle de l'enroulement L1 est, à l'ouverture de l'interrupteur K, d'imposer une tension négative aux bornes de l'inductance L, de façon à lui permettre de transférer l'énergie qu'elle contient au condensateur C0. La diode D1 est alors polarisée en direct.

L'enroulement L2 a pour rôle, lors de la fermeture de l'interrupteur K, d'imposer une tension négative aux bornes de l'inductance L, afin de transférer l'énergie qu'elle contient dans l'enroulement L2 du circuit magnétique 10. Cette énergie est récupérée par l'enroulement L0 qui la restitue au condensateur C0 lors de l'ouverture suivante de l'interrupteur.

Pour respecter ces fonctionnalités, les points de phase respectifs des enroulements sont choisis de la façon suivante. En supposant le point de phase de l'enroulement L0 relié à la borne 2 comme cela est illustré en figure 1, le point de phase de l'enroulement L1 est côté point 4 et le point de phase de l'enroulement L2 est côté masse 5. Par contre, si le point de phase de l'enroulement L0 est connecté au point 4, le point de phase de l'enroulement L1 est côté borne 3 et le point de phase de l'enroulement L2 est côté point 4. Les positions des diodes DL et D2 par rapport aux enroulements L1 et L2 avec lesquels elles sont respectivement en série peuvent être inversées.

Pour réaliser un convertisseur abaisseur de tension, l'interrupteur K est connecté en série avec l'inductance L0 entre les bornes positives d'entrée 2 et de sortie 3 (ou entre la masse 5 et la borne 3) avec interposition de l'inductance L. La diode de roue libre DL en série avec l'enroulement L1 relie, à la masse (respectivement à la borne 2), le point milieu entre les inductances L et L0, l'anode de la diode DL étant reliée à la masse 5 (respectivement sa cathode étant reliée à la borne 2). L'inductance L2 en série avec la diode D2 est connectée entre la borne 2 et le point milieu entre les inductances L et L0 (respectivement entre ce point et la masse), l'anode de la diode D2 étant côté borne 2 (respectivement côté borne 5). Enfin, la diode D1 relie, à la masse 5 (respectivement à la borne 2), le point entre l'interrupteur K et l'inductance L, l'anode de la diode D1 étant reliée à la masse (respectivement sa cathode étant reliée à la borne 2). Avec une connexion de l'interrupteur K côté borne 2, si le point de phase de l'enroulement L0 est côté inductance L, le point de phase de l'enroulement L1 est côté borne de masse 5 et le point de phase de l'enroulement L2 est côté borne 2. Avec une connexion de l'interrupteur K côté masse, si le point de phase de l'enroulement L0 est côté borne 2, le point de phase de l'enroulement L1 est côté borne 3 et celui de l'enroulement L2 est côté masse 5.

Le principe de fonctionnement est le même. De l'énergie est emmagasinée dans l'inductance L0 pendant les périodes de fermeture de l'interrupteur K. Pendant les périodes où l'interrupteur K est ouvert, cette énergie est restituée au condensateur C0, la diode de roue libre DL servant à reboucler le circuit et le circuit magnétique servant à récupérer des pertes liées à la commutation de fermeture de l'interrupteur de puissance pour les réinjecter dans la charge.

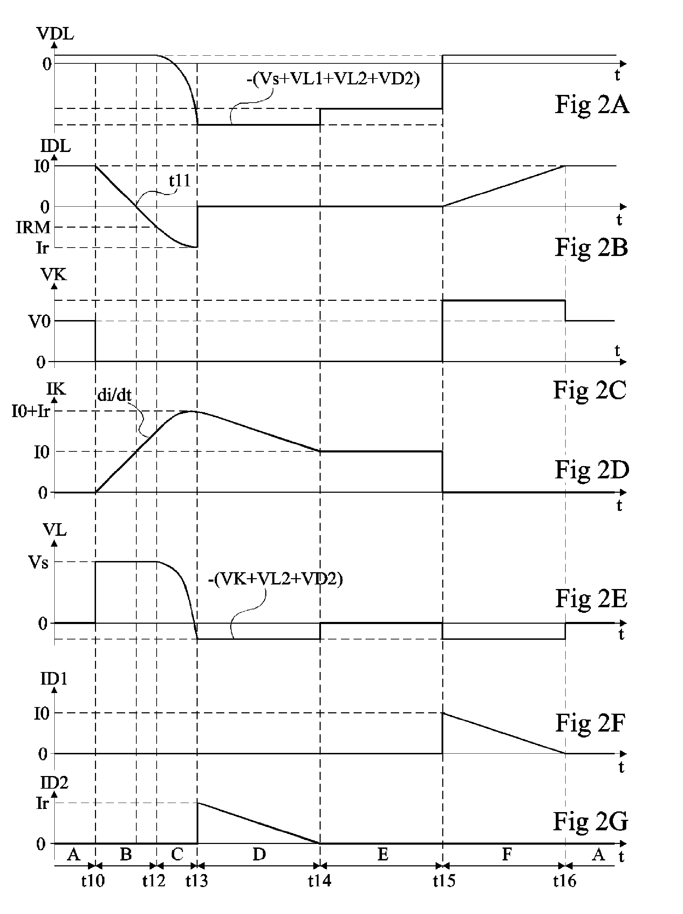

Les figures 2A à 2G représentent, sous forme de chronogrammes et sans respect d'échelle, un exemple de cycle de commutation de l'interrupteur K, illustrant le fonctionnement du circuit d'aide à la commutation représenté en figure 1.

La figure 2A représente la tension VDL aux bornes de la diode de roue libre DL. La figure 2B représente le courant IDL dans la diode DL. La figure 2C représente la tension VK aux bornes de l'interrupteur K. La figure 2D représente le courant IK dans l'interrupteur. La figure 2E représente la tension VL aux bornes de l'inductance L de contrôle du di/dt. La figure 2F représente le courant ID1 dans la diode D1. La figure 2G représente le courant ID2 dans la diode D2. Les signes des courants et tensions représentés aux figures 2A à 2G sont pris en relation avec les sens indiqués en figure 1.

On suppose qu'avant un instant t10, l'interrupteur K est ouvert, le convertisseur étant alors en roue libre (phase A). Pendant cette période de roue libre, un courant supposé constant 10 circule dans la diode DL en étant restitué par les inductances L0 et L1. Pendant cette phase A où l'interrupteur K est ouvert, le schéma équivalent du convertisseur comprend uniquement l'inductance L0 en série avec l'inductance L1 et la diode DL polarisée en direct entre les bornes 2 et 3 pour fournir l'énergie à la charge et au condensateur C0. La tension VDL aux bornes de cette diode est légèrement positive et correspond à la chute de tension dans la jonction PN en direct (de l'ordre de 0,7V). Côté interrupteur K, celui-ci voit à ses bornes une tension V0 correspondant à la tension Vs majorée de la tension VDL et diminuée de la chute de tension dans l'enroulement L1. La tension VL dans l'inductance L est en effet nulle dans cette période comme on le verra par la suite en relation avec la fin des chronogrammes. Les diodes D1 et D2 sont bloquées et les courants qui les traversent sont, par conséquent, nuls. Le courant IK dans l'interrupteur K ouvert est, bien entendu, nul.

A l'instant t10, le circuit 1 commande la fermeture de l'interrupteur K. On entre donc dans une phase B (la première phase de la commutation) de début de fermeture. Du point de vue schéma équivalent et par rapport à la phase A, l'inductance L en série avec l'interrupteur K fermé (court-circuit) est intercalée entre le point 4 et la masse 5. Le di/dt à la fermeture de l'interrupteur K est essentiellement fonction de l'inductance L. En effet, ce di/dt dépend de la tension Vs, de la tension Vin, de la mutuelle inductance du circuit magnétique et des valeurs à vide L11 et L22 des inductances du transformateur constitué par les enroulements principal L0 et secondaires L1 et L2. En raison du rapport de spires choisi, la valeur L11 est très grande devant la valeur L22. La mutuelle inductance est par ailleurs faible devant la valeur L11. Il en découle que la pente (di/dt) est, en première approximation, égale à Vs/L. Le courant IDL dans la diode DL décroît donc avec cette pente jusqu'à un instant t12. Comme on a recours à une jonction PN, la diode présente une zone de charges recouvrées. Par conséquent, le courant IDL s'annule à un instant t11, intermédiaire entre les instants t10 et t12. Cet instant t11 correspond à l'instant où le courant dans le commutateur K atteint la valeur 10. Entre les instants t10 et t12, les diodes D1 et D2 restent bloquées. La tension VL aux bornes de l'inductance L devient approximativement égale à la tension Vs.

A l'instant t12, le courant dans la diode DL atteint la valeur IRM correspondant au maximum de charges recouvrées. A partir de l'instant t12, les charges recouvrées par la diode DL diminuent. La diode DL se comporte alors comme une capacité. Comme le nombre de spires de l'inductance L1 est faible devant le nombre de spires de l'inductance L0, la tension VL1 à ses bornes est faible. Il en découle que la capacité constituée par la diode DL se charge en négatif. Ce phénomène est illustré en figure 2B par une poursuite de la décroissance du courant IDL jusqu'à un instant t13 en forme de charge de capacité. Le courant décroît jusqu'à un courant Ir conditionné par l'inductance L2. En effet, la tension VL qui décroît pendant cette phase C devient négative jusqu'à rendre la diode D2 passante lorsque la tension VL devient suffisamment négative (instant t13). Côté diode DL, la tension VDL atteint, à l'instant t13, la valeur -(Vs + VL1 + VL2 + VD2). La tension VL atteint, à l'instant t13, la valeur -(VK + VL2 + VD2).

A l'instant t13 où la diode D2 devient passante, le courant IDL dans la diode DL s'interrompt brutalement et le courant correspondant est réinjecté dans l'inductance L2. Le courant en excès (Ir) donne l'amplitude maximale du courant dans l'inductance L2. Ce courant dépend des nombres de spires n0 et n2 des inductances L0 et L2. A partir de l'instant t13, on assiste à une conduction de la diode D2 (phase D). Comme la diode DL est bloquée, le condensateur C0 est déconnecté. Le circuit magnétique est, pendant la phase D, dissocié de la charge Q. La diode D2 sert alors d'élément de roue libre pour transférer l'énergie stockée par l'inductance L dans le circuit magnétique par l'intermédiaire de l'enroulement L2. Les tensions aux bornes de la diode DL et de l'inductance L restent inchangées. De même, l'interrupteur K étant fermé, la tension à ses bornes est nulle. La diode D1 est bloquée. Quand le courant est intégralement transféré dans le circuit magnétique par l'inductance L2, le courant dans celle-ci s'annule (instant t14), ce qui provoque le blocage naturel de la diode D2, c'est-à-dire avec un di/dt faible. L'enroulement L2 permet la décroissance du courant dans l'interrupteur K en transférant l'énergie au circuit magnétique qui le restituera par l'inductance L0. Entre les instants t13 et t14, le courant dans l'interrupteur K décroît depuis le niveau 10 + Ir jusqu'au niveau 10.

A l'instant t14, la tension aux bornes de l'inductance L s'annule, l'énergie qu'elle contenait ayant été transférée dans le circuit magnétique. La tension aux bornes de la diode DL remonte légèrement tout en restant négative et prend une valeur -(Vs + VL1) + VL + VK. On se souviendra que les tensions VL et VK sont alors négligeables (considérées comme nulles) par rapport aux tensions Vs et VL1.

A partir de l'instant t14, on entre dans une phase E où l'interrupteur K est fermé et où la commutation est terminée. Le schéma équivalent comprend uniquement la source de tension Vin, les inductances L0 et L, et l'interrupteur K. Le courant IK est stable au niveau 10 de même que la tension VDL, la diode de roue libre étant bloquée. La tension aux bornes de l'interrupteur K est, bien entendu, nulle de même que la tension aux bornes de l'inductance L et les courants dans les diodes D1 et D2. Pendant la phase E, l'inductance L0 se trouve chargée à travers l'inductance L et l'interrupteur K.

A un instant t15 où le circuit 1 provoque l'ouverture de l'interrupteur K, on impose, grâce à la présence de l'enroulement L1, une tension négative aux bornes de l'inductance L. Dans ce cas, il n'est pas nécessaire de contrôler le di/dt à l'ouverture du transistor. Le courant s'interrompt brutalement dans l'interrupteur K. L'inversion de la tension aux bornes de l'inductance L1 provoque l'évacuation, par la diode D1, de l'énergie stockée pendant la phase E dans l'inductance L. A l'instant t15, le courant ID1 prend donc brusquement la valeur 10 et ce courant décroît jusqu'à s'annuler à un instant t16. La pente de décroissance du courant ID1 est fonction de la valeur de l'inductance L et correspond approximativement à VL1/L. Le courant dans l'inductance L s'annule à l'instant t16 et tout le courant accumulé dans l'enroulement L0 circule alors par l'enroulement L1 et la diode DL. On notera que les diodes DL et D1 conduisent en même temps, mais le courant dans la diode DL part de zéro à l'instant t15.

A l'instant t16, on se retrouve dans la phase A où l'interrupteur est ouvert.

Le recours à un circuit magnétique permet, entre autres, de récupérer des pertes liées à la commutation de fermeture de l'interrupteur de puissance pour les réinjecter dans la charge et, par ce biais, d'améliorer le rendement.

Toutefois, son efficacité en terme de réduction des pertes est sensible d'une part à des variations de valeur de l'inductance L et d'autre part à des variations de la puissance appelée par la charge.

Les figures 3A et 3B sont des agrandissements superposés des chronogrammes des figures 2C et 2D au début de la phase B (instant t10), c'est-à-dire d'un cycle de fermeture de l'interrupteur K, pour deux valeurs différentes de l'inductance L (respectivement inférieure et supérieure).

Alors que la pente de décroissance dVK/dt de la tension VK lors de la fermeture ne dépend pas de la valeur de l'inductance L, la pente di/dt d'établissement du courant IK dépend, entre autres, de cette valeur (di/dt = Vin/L). Il en résulte que plus la valeur de l'inductance L est faible (figure 3B), plus le courant atteint à travers l'interrupteur sous une tension non nulle (avant l'instant t20) est élevé. Comme l'intervalle de temps entre les instants t10 et t20 ne dépend pas de la valeur de L, plus la valeur de L est faible, plus la puissance dissipée dans l'interrupteur K à la fermeture est élevée (surface hachurée aux figures 3A et 3B).

Les figures 4A et 4B reprennent le chronogramme de la figure 2F (courant ID1 dans la diode D1) dans la phase F et autour pour deux puissances de sortie différentes (respectivement inférieure et supérieure), illustrant la décharge de l'inductance L dans la charge Q.

La pente de disparition du courant dépend de la tension aux bornes de l'inductance L, donc des tensions aux bornes des diodes D1 et DL et aux bornes de l'inductance L1 (dID1/dt = (-VL1+(VD1+VDL))/L), mais pas de la puissance appelée par la charge. Or, cette puissance conditionne la valeur du courant 10 traversant l'interrupteur K pendant la phase E, donc l'énergie que doit libérer l'inductance L pendant la phase F. Par conséquent, l'instant (t16 - figure 4A, t16' - figure 4B) auquel le courant ID1 s'annule et à partir duquel peut débuter le cycle suivant intervient de plus en plus tard avec une augmentation de la puissance. L'existence d'une phase A est cependant requise pour préserver les avantages d'une commutation douce qui requiert que l'inductance soit déchargée avant le début (instant t10) du cycle de commutation suivant. Il faut donc diminuer la valeur de l'inductance L (pour accélérer sa décharge en fin de cycle) si la puissance est plus élevée.

Il en est de même si la fréquence de découpage est élevée. En effet, en raccourcissant la durée globale du cycle (phases F à A), on dispose de moins de temps pour décharger l'inductance L et il faudrait donc en diminuer la valeur.

Or, diminuer la valeur de l'inductance L engendre des pertes supérieures à la fermeture de l'interrupteur (figures 3A et 3B). De plus, les dispersions de valeurs liées aux tolérances de fabrications des enroulements inductifs des circuits magnétiques peuvent atteindre une vingtaine de pourcents.

On effectue donc généralement un compromis entre la puissance dissipée dans l'interrupteur à sa fermeture et la puissance et/ou la fréquence maximale de fonctionnement pour choisir la valeur de l'inductance L.

Plus la fréquence ou la puissance est élevée, plus ce compromis est difficile. On perd alors les effets bénéfiques du contrôle du di/dt à la fermeture de l'interrupteur par l'inductance L.

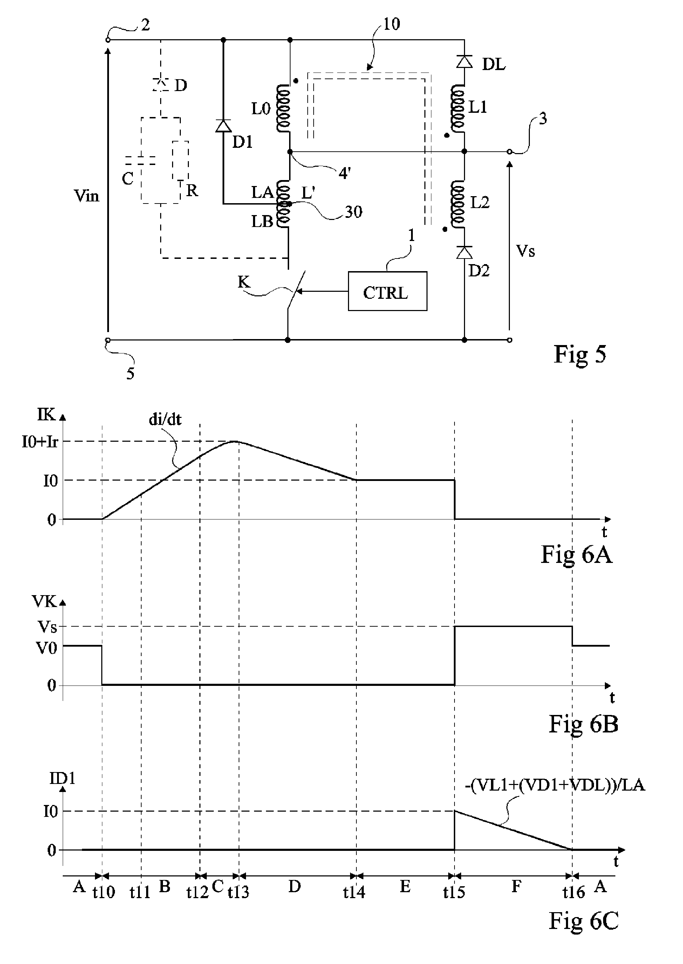

La figure 5 représente un mode de réalisation d'un convertisseur de tension selon la présente invention. On suppose un montage, dit de roue libre, effectuant une conversion d'énergie sans abaissement ni élévation de tension.

Par rapport au montage de la figure 1, l'inductance L0 relie directement une borne 2 d'application du potentiel le plus élevé (par exemple positif) d'une tension continue d'entrée Vin et une borne 3 de fourniture d'une tension Vs à une charge (borne 4' de l'inductance L0 reliée à la borne 3). La borne 3 est également reliée à une borne 5 d'application du potentiel le plus faible de la tension Vin (par exemple, la masse 5) par un élément inductif L' en série avec un interrupteur de découpage K. L'interrupteur K est commandé par un circuit 1 (CTRL). L'inductance L0 est un enroulement principal d'un circuit magnétique 10 comportant deux enroulements secondaires L1 et L2. Une diode de roue libre DL en série avec un premier enroulement secondaire L1 relie les bornes 2 et 3, la cathode de la diode DL étant côté borne 2. Un deuxième enroulement secondaire L2 en série avec une diode D2 relie les bornes 3 et 5, l'anode de la diode D2 étant côté borne 5. Les positions des diodes DL et D2 par rapport aux enroulements L1 et L2 avec lesquels elles sont respectivement en série peuvent être inversées.

Selon ce mode de réalisation, l'élément inductif L' est une inductance à point milieu 30, relié par une diode D1 à la borne 2, l'anode de la diode D1 étant côté point 30. Cette inductance à point milieu forme, avec la diode D1, un élément inductif bi-valeur à commutation automatique entre ses deux valeurs.

Fonctionnellement, cela revient à disposer deux inductances LA et LB en série entre l'inductance L0 et l'interrupteur K et à relier le point milieu 30 entre les inductances LA et LB à la borne 2 par la diode D1. La valeur de l'inductance LA est choisie pour être inférieure à celle de l'inductance LB.

Les figures 6A, 6B et 6C sont des chronogrammes illustrant le fonctionnement du convertisseur de la figure 5. La figure 6A est un exemple d'allure du courant IK dans l'interrupteur K pendant un cycle de découpage de la tension d'entrée Vin. Les figures 6B et 6C représentent les allures correspondantes de la tension VK aux bornes de l'interrupteur K et du courant ID1 dans la diode D1. Ces allures, comme celles du reste du circuit, correspondent à celles des figures 2A à 2G, mais avec une pente di/dt de croissance du courant IK dans la phase B et avec une décharge (dIL'/dt) de l'élément inductif L' fixées par des valeurs d'inductances (LA et LA+LB) différentes.

Entre les instants t10 et t12, le schéma équivalent du montage revient à appliquer la tension Vin aux bornes de l'association en série de l'inductance L0 avec l'inductance L' (LA+LB), les diodes DL, D1 et D2 étant bloquées. Le courant traversant l'inductance L0 se partage entre la charge (condensateur C0, figure 1) et l'inductance L'.

Entre les instants t15 et t16 (phase F), la décharge de l'inductance L' de contrôle du di/dt ne s'effectue que pour une partie de celle-ci (l'inductance LA). La pente de cette décharge dépend donc de la valeur de l'inductance LA alors que la pente de charge dépend de la valeur totale LA+LB. Cela permet de choisir la valeur de l'inductance LA en fonction de la durée souhaitée ou disponible pour la phase F et de préserver l'existence d'un temps mort (phase A) qui soit compatible avec les tolérances de fabrication, tout en préservant une inductance (LA+LB) suffisante pour une commutation douce à la fermeture de l'interrupteur.

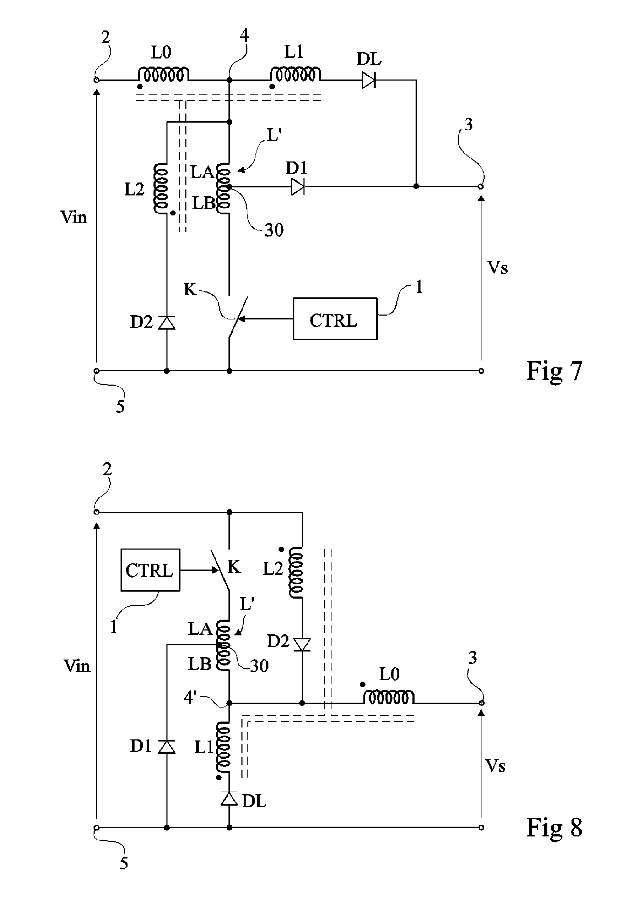

La figure 7 représente un mode de réalisation d'un convertisseur élévateur. Par rapport au montage de la figure 1, l'inductance L est remplacée par une inductance L' à point milieu 30 et l'anode de la diode D1 est connectée à ce point milieu. Le fonctionnement du circuit de la figure 7 se déduit de celui exposé en relation avec les montages précédents.

La figure 8 représente un mode de réalisation d'un convertisseur abaisseur. Par rapport au montage de la figure 7, l'interrupteur K relie la borne 2 à une première extrémité de l'inductance L' (côté partie LA) et l'inductance L0 est entre la borne 3 et l'autre extrémité (borne 4') de l'inductance L'. L'association en série de la diode DL et de l'inductance L1 est entre la borne 4' et la masse 5, l'anode de la diode DL étant côté borne 5. L'association en série de l'inductance L2 et de la diode D2 relie les bornes 2 et 4', l'anode de la diode D2 étant côté borne 2. Enfin, la diode D1 relie le point milieu 30 de l'inductance L' à la masse 5, l'anode de la diode D1 étant côté masse. Le fonctionnement du circuit de la figure 8 se déduit de celui exposé en relation avec les montages précédents.

Un avantage des circuits des figures 5, 7 et 8 est qu'ils combinent une commutation douce réduisant les pertes à la fermeture de l'interrupteur avec une récupération d'une partie de ces pertes pour les réinjecter dans la charge lorsque l'interrupteur est ouvert.

Un autre avantage est que le fonctionnement est automatique dans le changement de valeur de l'inductance concernée entre la fermeture et l'ouverture de l'interrupteur.

Le fonctionnement du circuit est compatible avec des fréquences de découpage élevées (plus d'une centaine de kHz) et avec des puissances supérieures à 0,5 kW.

De plus, aucune commande supplémentaire par rapport à celle habituelle de l'interrupteur à découpage K n'est nécessaire. En outre, le circuit de commande 1, pourvu qu'il effectue une régulation de la tension de sortie Vs (ce qui est généralement le cas), n'a pas à être modifié pour adapter le rapport cyclique.

Le circuit magnétique L0, L1, L2 peut être réalisé sous la forme d'une seule inductance à trois enroulements.

L'élément inductif L' est, de préférence, une inductance à point milieu réalisée par un enroulement conducteur sur un même noyau. Cela présente l'avantage d'éviter les éventuels problèmes de compatibilité électromagnétique. En variante, l'inductance L' pourra être constituée de deux enroulements distincts en série.

L'élément de commutation automatique de la valeur de l'inductance entre les phases de fermeture (LA+LB) et d'ouverture (LB) est de préférence une diode (D1) pour sa simplicité.

Pour éviter d'éventuelles surtensions aux bornes de l'interrupteur K, on peut optionnellement prévoir un limiteur représenté en pointillés en figure 5 (condensateur C en parallèle avec une résistance R, le tout en série avec une diode D) entre l'interrupteur K et la borne 2 (avec la cathode de la diode D côté borne 2) en parallèle sur la diode D1. Un montage similaire peut être prévu, entre l'interrupteur K et la borne 3 (avec la cathode de la diode D côté borne 3) pour un convertisseur élévateur (figure 7) ou en parallèle avec l'interrupteur K (avec la cathode de la diode D côté borne 2) pour un convertisseur abaisseur (figure 8).

Bien entendu, la présente invention est susceptible de diverses variantes et modifications qui apparaîtront à l'homme de l'art. En particulier, les dimensionnements des différents enroulements du circuit magnétique pourront être modifiés pourvu de respecter un enroulement L0 d'un nombre n0 de spires nettement supérieur (par exemple avec un rapport de l'ordre de 10) aux nombres n1 et n2 de spires des enroulements L1 et L2. De préférence, les nombres de spires des enroulements L1 et L2 sont égaux. Pour l'inductance L', ce choix dépend pour la valeur LA entre autres de la fréquence maximale de découpage et de la puissance maximale susceptible d'être appelée par la charge, et des pertes acceptables pour la valeur LB. Par exemple, les valeurs LA et LB sont dans un rapport (LB/LA) compris entre 0,1 et 0,7.

De plus, l'invention s'applique à tout montage de convertisseur (roue-libre, abaisseur, élévateur ou mixte) pourvu qu'il s'agisse d'un convertisseur à découpage. En particulier, les diverses variantes de montage des convertisseurs (interrupteur K côté borne plus positive 2 ou plus négative 5, positions respectives des diodes dans leurs associations en série avec les inductances, etc.) sont transposables à l'invention.

Enfin, parmi les variantes possibles, on pourra diviser l'inductance L0 en un élément (principal) du circuit magnétique en série avec une inductance distincte n'appartenant pas au circuit magnétique. On pourra également adapter les vitesses de commutation des diodes bien que, pour obtenir les avantages de l'invention, ces diodes n'aient pas besoin d'être rapides.

## Revendications

1. Convertisseur de puissance à découpage, **caractérisé en ce qu'**il comporte, entre une première extrémité (4, 4') d'un élément inductif principal (L0) et un interrupteur (K), un élément inductif (L') bi-valeur (LA, LB) à commutation automatique entre ses deux valeurs, formé de deux éléments inductifs en série et d'un élément de commutation automatique.

2. Convertisseur selon la revendication 1, dans lequel l'élément inductif bi-valeur (L') comporte deux éléments en série dont le point milieu (30) est relié, par une première diode (D1), à une borne (2, 5) d'application d'une tension d'entrée (Vin).

3. Convertisseur selon la revendication 1, dans lequel l'élément inductif bi-valeur (L') comporte deux éléments en série dont le point milieu (30) est relié, par une première diode (D1), à une borne (3) de fourniture d'une tension de sortie (Vs).

4. Convertisseur selon l'une quelconque des revendications 1 à 3, dans lequel l'élément inductif bi-valeur (L') est une inductance à point milieu (30).

5. Convertisseur selon l'une quelconque des revendications 1 à 4, dans lequel l'élément inductif principal (L0) forme un enroulement principal d'un circuit magnétique (10) dont deux enroulements secondaires (L1, L2) électriquement en série ont le point milieu de cette association en série relié à ladite première extrémité (4, 4') de l'enroulement inductif principal.

6. Convertisseur selon la revendication 5, dans lequel chaque enroulement secondaire (L1, L2) est en série avec une diode (DL, D2) autre que la première diode (D1).

7. Convertisseur selon la revendication 5 ou 6, dans lequel les enroulements secondaires (L1, L2) participent à une décharge de l'élément inductif bi-valeur (L') à l'ouverture et à la fermeture de l'interrupteur (K), l'un d'entre eux participant à un transfert de l'énergie correspondant à la fermeture audit enroulement principal (L0).
